# DEMANDE DE BREVET EUROPEEN

(11) **EP 2 043 027 A1**
(43) Date de publication de la demande: **01.04.2009**
(21) Numéro de dépôt: 07291137.3
(22) Date de dépôt: 25.09.2007
(51) Int. Cl.: G06K 19/077

(54) **Procédé de réalisation d'une antenne de transpondeur sur substrat par connexion de portions de spires d'antenne et antenne obtenue**

(71) Demandeur: Axalto S.A., 92190 Meudon (FR)
(72) Inventeur: Hauber, Francis, 92290 Chatenay-Malabry (FR)
(74) Mandataire: Brun, Philippe Alexandre Georges

(57) **Abrégé**

L'invention concerne un procédé de réalisation d'au moins une antenne de transpondeur sur un substrat, ladite antenne présentant un circuit de n spires ayant quatre angles chacune et des portions rectilignes entre les angles; Il se distingue en ce que ledit procédé comprend les étapes suivantes :
- réalisation d'un support (39, 40) comprenant des fils conducteurs (1-19), lesdits fils conducteurs présentant des portions de spires (1AD-19DC) correspondant à celles des portions rectilignes du circuit d'antenne à obtenir, et des croisements de fils (IA-ID)au niveau des angles (A, B, C, D),
- soudure des fils conducteurs au niveau des croisements (IA-ID) de fils de manière à former le circuit d'antenne.

L'invention concerne également l'antenne obtenue et le transpondeur la comportant.

## Description

L'invention concerne un procédé de réalisation d'antenne de transpondeur sur un substrat à partir de portions de spire d'antenne.

L'invention concerne également les transpondeurs de type sans-contact radiofréquence comportant une telle antenne et tout produit de communication radiofréquence comportant une telle antenne.

L'invention, vise une utilisation du procédé ci dessus à la réalisation de carte à puce sans contact et /ou de document de voyage tel que passeport électronique, de visa électronique, étiquette électronique, tout produit électronique de communication notamment RFID comportant une connexion d'un module électronique ou composant électronique à une antenne.

Parmi les procédés de réalisation de transpondeur de qualité ayant des caractéristiques très reproductibles et très performantes, on connaît l'usage d'antenne filaire disposée dans un corps de carte en matière plastique par une technologie de fil incrusté à l'aide de sondes à ultra sons. Le module est ensuite connecté par thermo-compression avec le même fil d'antenne.

De tels fils conducteurs, généralement en cuivre, très fins, inférieur à 300 µm, et espacés de l'ordre de quelques centaines de µm pour constituer des spires d'antenne, permettent d'obtenir un facteur qualité élevé, par exemple supérieur à 40 contrairement à des antennes obtenues par dépôt de matière conductrice, notamment par sérigraphie d'encre conductrice. D'autre part, pour effectuer des croisements de spires sans court circuit, il est nécessaire d'avoir des fils conducteur gainés d'un isolant.

On connaît le document JP 2001-344580, qui décrit un procédé de réalisation d'antenne par couture d'un fil conducteur qui s'étend sur un plan de substrat et alternativement sur son plan opposé.

L'antenne est connectée directement aux plots d'une puce de circuit intégré par matière conductrice.

Ces procédés requièrent des machines particulières pour l'insertion du fil sur le support. Dans le cas de la couture ou broderie, beaucoup de têtes de couture ou de broderie sont requises pour réaliser des grandes quantité d'antenne.

L'invention a pour objectif de permettre une fabrication aisée d'antenne plate pour transpondeur radiofréquence.

A cet effet, l'invention a pour objet un procédé de réalisation d'au moins une antenne de transpondeur sur un substrat, ladite antenne présentant un circuit de n spires ayant quatre angles chacune et des partions rectilignes entre les angles;

Le procédé se distingue en ce qu'il comprend les étapes suivantes:
- réalisation d'un support comprenant des fils conducteurs, lesdits fils conducteurs présentant des portions de spire correspondant à celles des portions rectilignes du circuit d'antenne à obtenir, et des croisements de fils au niveau des angles,
- soudure des fils conducteurs au niveau des croisements de fils de manière à former le circuit d'antenne.

Ainsi, on réalise simplement une antenne pour le report de portions de fils conducteurs sur un support par différentes techniques de report basiques et leurs connections au niveau des croisements de portions.

Selon d'autres caractéristiques du procédé :
- le support est un tissu et les fils conducteurs formant des fils de chaine et de trame, permettent un report de fils conducteurs en même temps que le tissage sans occasionner d'opération supplémentaire;
- le circuit comporte au moins un fil conducteur supplémentaire pour former au moins un pont isolant au dessus des spires, ledit pont étant destiné à connecter la spire interne et/ou externe à un composant électronique;
- les fils sont déposés sur un substrat à l'aide. de rubans portant des faisceaux de fils;
- pour souder, on utilise un détecteur optique d'intersection de fil et un logiciel de calcul repérage de croisements;
- les soudures sont effectuées par thermo-compression.

L'invention a également pour objet :
- une antenne de transpondeur correspondant au procédé ci-dessus;
- un transpondeur sans-contact comportant une antenne disposées sur un substrat et connecté à un module électronique, dans lequel l'antenne est réalisée selon le procédé ci-dessus et/ou conforme à l'antenne obtenue;
- un produit électronique de communication radiofréquence, tel une carte à puce sans-contact, comprenant le transpondeur ci-dessus.

L'invention a pour également pour avantage une incrustation des fils conducteurs plus rapide que lors d'une opération de broderie. En effet, l'incrustation des fils conducteurs est effectuée sur la machine de tissage, vraisemblablement sans modification de celle-ci.

En outre, il n'y a pas de déformation de la trame du tissu due à 1a broderie et l'on peux s'attendre à une meilleure maitrise dimensionnelle des antennes, ce qui est primordial pour la réalisation de cartes sans-contact (les tolérances de positionnement des antennes étant critiques, en particulier dans le cas de cartes avec embossage).

D'autres particularités et avantages de l'invention apparaîtront à la lecture de la description qui suit, donnée à titre d'exemple illustratif et non limitatif, et faite en référence aux figures annexées pour lesquelles :
- la figure 1 illustre schématiquement une étape d'un mode préféré de mise en oeuvre du procédé de l'invention;
- la figure 2 illustre schématiquement une seconde étape d'un mode préféré de mise en oeuvre du procédé de l'invention;
- la figure 3 illustre une étape de réalisation d'un transpondeur par adjonction et connexion de module conformément à un mode de mise en oeuvre de l'invention;
- la figure 4 illustre schématiquement une étape d'un autre mode de mise en oeuvre du procédé de l'invention;

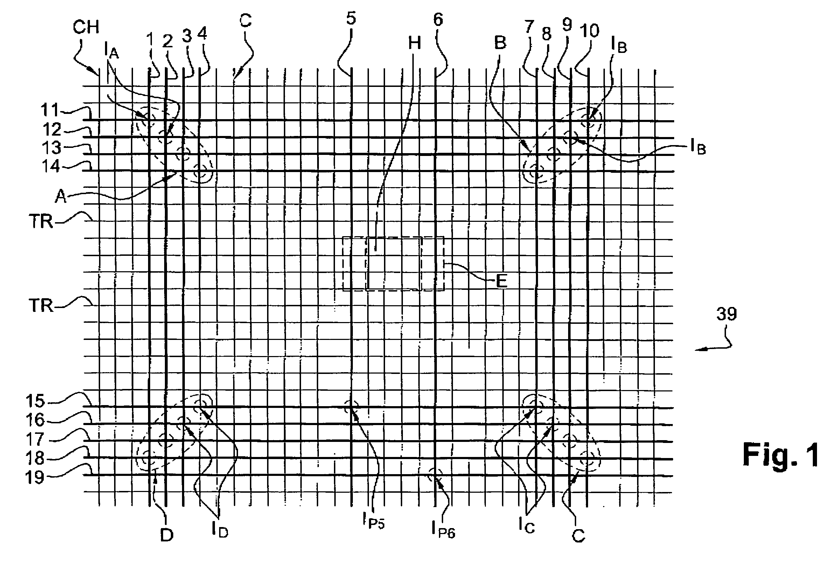

A la figure 1, est illustrée une première étape de réalisation d'au moins une antenne de transpondeur sur un substrat. Les antennes visées par le procédé présentent un circuit de n spires ayant quatre angles chacune et des portions rectilignes entre les angles. L'antenne ici est destinée à présenter trois spires.

Selon une caractéristique de l'invention, le procédé comprend d'abord une étape de réalisation d'un support 1 comprenant des fils conducteurs 1 - 19; Les fils conducteurs présentent ou comprennent des portions de spire qui correspondent à des portions du circuit d'antenne à obtenir. Ces portions sont de préférence mais non exclusivement rectilignes.

Les fils conducteurs forment également entre eux des croisements de fils IA, IB, IC, ID au niveau des quatre angles A, B, C, D de l'antenne qui ici ont une forme générale rectangulaire.

Dans l'exemple, le support d'antenne est obtenu simplement par une opération de tissage d'un tissu dont certains fils conducteurs forment des fils de chaine et de trame. Les fils conducteurs ont été tissés en même temps que des fils textiles, par exemple en coton. Il a suffi de remplacer, à des endroits prédéterminés, des fils isolants destinés à former le tissu par des fils conducteurs.

Les autres fils de chaine (CH) ou de trame (TR) distincts des fils conducteurs visés sont inchangés et constituent des fils de tissage non conducteur. Ces endroits prédéterminés dans le tissu correspondent exactement à des positions de portion de cpirco de l'antenne à obtenir.

Toutefois, les fils conducteurs pourraient être disposés sur un substrat par tout autre moyen connu, tel qu'une fixation de fils par collage sur le substrat.

Selon une caractéristique de l'exemple, 1 le circuit d'antenne peut comporter au moins un fil conducteur supplémentaire pour former au moins un pont isolant au dessus des spires.

Le pont isolant est destiné à connecter la spire interne ou externe à un composant électronique situé d'un autre côté des spires par rapport à la spire interne ou externe à connecter. Les fils destinés à constituer des ponts isolants présentent des intersections IP5, IP6 avec des fils de trame 15 et 19 qui comprennent des portions destinées à correspondre à des portions de spires respectivement interne et externe de l'antenne à obtenir.

En l'occurrence, deux fils 5, 6 sont ajoutés comme fils de chaine sensiblement au droit d'un emplacement (E) des plages de contact d'un module ou des points de connexion d'une puce électronique, reportées ultérieurement.

Le cas échéant, le module peut enjamber les spires de manière que ses plages de contact soient au droit de fils conducteurs permettant au procédé de s'affranchir ainsi de la réalisation des ponts isolants.

Selon une caractéristique avantageuse, les fils conducteurs disposés selon une direction du support comportent un gainage isolant par exemple les fils de chaine alors que ceux disposés dans une direction différente, par exemple, les fils de trame, en sont dépourvus. Cela permet de réduire le coût des fils et de faciliter les soudures. Dans ce cas, il est nécessaire d'avoir soit un fil parallèle ou adjacent sur deux séparé d'au moins un fil isolant ou un fil isolé pour éviter des courts-circuits entre fils.

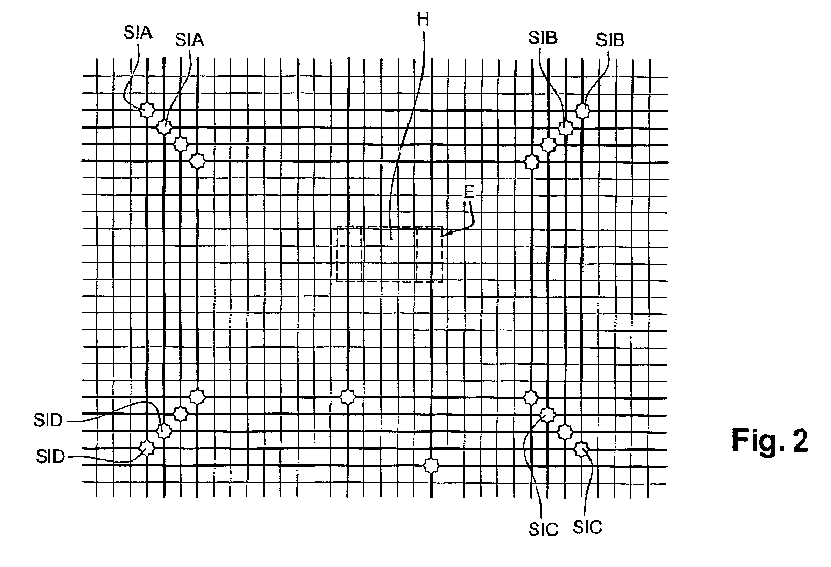

A la figure 2, selon une caractéristique de l'exemple de l'invention, le procédé comporte une étape de connexion des fils conducteurs au niveau de certains croisements IA, IB, IC, ID de fils choisis de manière à former le circuit d'antenne.

De préférence, les connexions sont réalisées par des soudures. Toute technique de soudures filaire peut être envisagée. De préférence, on utilise une technique de thermo compression dans laquelle les fils sont chauffée et pressés ou une technique de soudure ultra-sons de manière à enlever le cas échéant l'émail isolant qui peut gainer les fils conducteurs. D'autres techniques de connexion sont utilisables telles que celles prévoyant de la matière ou colle conductrice ou les soudures par apport ou non de matière de soudage.

Pour faciliter le report et/ou encastrement de tout ou partie d'un module électronique, le procédé peut prévoir de perforer / poinçonner le substrat à un emplacement H. Ici, l'emplacement est destiné à recevoir un enrobage d'une puce de circuit intégré du module.

Pour repérer les points de connexion, le procédé peut mettre en oeuvre de préférence un détecteur optique d'intersection de fils couplé à un logiciel de repérage des croisements assisté par ordinateur. A cet effet, des couleurs peuvent être utilisées pour les gainages des fils conducteurs pour permettre un repérage plus aisé.

Selon une variante de mise en oeuvre, tout ou partie des fils conducteurs peuvent être déposés sur un substrat 40 par l'emploi de rubans à faisceaux (F1, F2) de fils (110, 120, 130) ou (70, 80, 90) ou du faisceau F3 pour le ou les ponts isolants (60, 70). Les fils sont présentés sous forme de faisceaux de fils parallèles comme des nappes de fils isolés ou non. Sous forme de fils isolés, les fils peuvent être maintenus ensemble par leur gainage isolant d'une même matière, par exemple plastique.

Dans l'exemple, des fils de chaîne conducteurs (111, 112, 113) et (115, 116, 117) sont déjà présents dans un substrat tissé. Toutefois, le substrat isolant peut être par exemple un film ou feuille en matériau polymère, en PVC, PET (polyéthylène), en polycarbonate, papier, matériau de circuit imprimé ou tout autre matériau utilisé couramment pour réaliser des transpondeurs sans-contact.

Le substrat peut comporter des premiers faisceaux de fils conducteurs disposés autrement que par tissage, par exemple tricotage, broderie, incrustation par ultrasons, etc. Les fils peuvent avoir une orientation générale rectiligne et comprendre toutefois des ondulations ou des zigzags.

Le substrat peut avoir différentes épaisseurs, généralement inférieures ou égales à celle d'une carne à puce 0,76 mm de manière le cas échéant à servir d'insert entre deux films ou feuilles ou servir de support à une feuille de couverture et/ou d'impression. Typiquement le substrat peut avoir une épaisseur de 0,1 mm.

Ensuite, les rubans ou faisceaux de fil conducteurs gainés d'isolant ou non (110, 120, 130) sont laminés ou reportés perpendiculairement aux fils de tissage ou premiers faisceaux de fils conducteurs 111, 112, 113, 115, 116, 117.

Les fils reportés 111, 112, 113 peuvent être simplement dévidée d'une ou plusieurs bobines et fixés, par exemple, par points de colle sur le substrat tissé 40.

Le cas échéant, pour la connexion, il est préférable d'avoir un système de repérage comportant deux caméras disposées de part et d'autre de la surface du support ou des supports. D'autres système de repérage notamment par indexation, bien connu, peuvent être utilisés aussi bien pour repérer les connexions que l'emplacement du module ou une cavité ménagée au préalable pour le report du module.

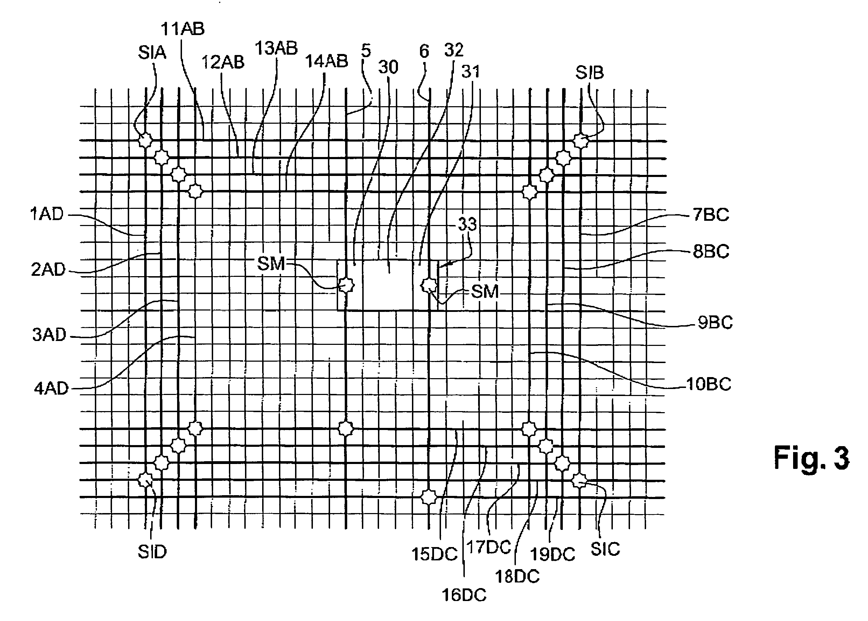

A la figure 3, on procède à la connexion des fils aux intersections en effectuant des soudures SIA, SID, SIB, SIC, etc. correspondant à des points d'intersection de fils conducteurs conforme au parcours ou motif d'antenne à réaliser.

On effectue également le report d'un module électronique 33 entre les fils de pont isolant 5, 6 et la connexion des plages de contact 30, 31 avec ces fils formant ainsi un transpondeur sans contact.

Le module 33 dans l'exemple est un module électronique du type sans-contact comportant un support, du type circuit imprimé, doté d'une puce de circuit intégré fixée sur le support et connecté par fil soudé ou selon une technique type flip-chip (puce retournée et connectée avec une colle conductrice), à des plages de contact 30, 31 qui s'étendent de part et d'autre du support de module. Un enrobage avec une résine de protection 32 peut venir couvrir la puce et ses contacts.

Pour faciliter la connexion, l'outil de soudure de thermo-comprecoion peut comprendre une enclume fine dont la section notamment en forme de lame couvre tous les points à connecter ensemble dans chaque angle de l'antenne.

L'invention couvre tout produit électronique de communication radiofréquence, tel une carte à puce sans contact, comprenant le transpondeur ci-dessus réalisé selon le procédé.

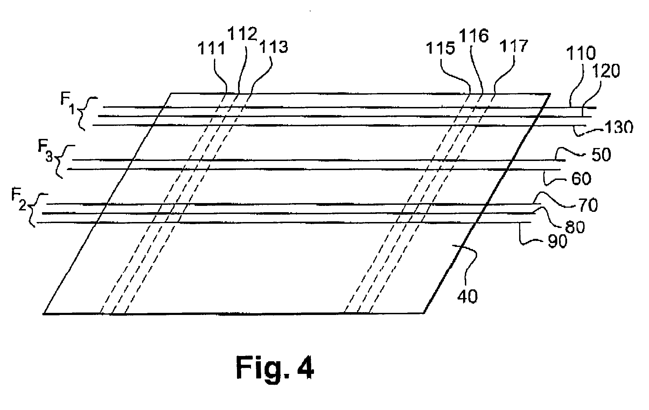

Pour le mode de mise en oeuvre de la figure 4, les fils peuvent être connectés de la même manière que précédemment.

Bien que décrit en relation à une antenne, 1 le procédé s'applique à la formation d'une pluralité d'antennes réalisées sur des rouleaux de tissu et ensuite découpées individuellement. La découpe peut s'effectuer de préférence après une lamination ou collage de feuilles de recouvrement et former ainsi des inserts pour produits électroniques tels que des passeports.

## Revendications

1. Procédé de réalisation d'au moins une antenne de transpondeur sur un substrat, 1 ladite antenne présentant un circuit de n spires ayant quatre angles chacune et des portions entre les angles,
**caractérisé en ce que** ledit procédé comprend les étapes suivantes:
- réalisation d'un support (39, 40) comprenant des fils conducteurs (1-19), lesdits fils conducteurs présentant des portions de spires (1AD-19DC) correspondant à des portions du circuit d'antenne à obtenir, et des croisements de fils (IA-ID) au niveau des angles (A, B, C, D),
- soudure des fils conducteurs au niveau des croisements (IA-ID) de fils de manière à former le circuit d'antenne.

2. Procédé selon la revendication 1, **caractérisé en ce que** le support est un tissu, les fils conducteurs formant des fils de chaine et de trame.

3. Procédé selon l'une des revendications précédentes, **caractérisé en ce que** le circuit comporte au moins un fil conducteur supplémentaire (5, 6) pour former au moins un pont isolant au dessus des spires, ledit pont étant destiné à connecter la spire interne et/ou externe à un composant électronique (33) placé respectivement à l'extérieur ou intérieur de l'antenne.

4. Procédé selon l'une des revendications précédentes, **caractérisé en ce que** les fils sont déposés sur un substrat à l'aide de rubans à faisceau de fils (F1, F2, F3).

5. Procédé selon l'une des revendications précédentes, **caractérisé en ce que** pour repérer des endroits de soudage, on utilise un détecteur optique d'intersection de fil et un logiciel de repérage de croisement.

6. Procédé selon l'une des revendications précédentes, **caractérisé en ce que** les soudures sont effectuées par thermo compression.

7. Antenne de transpondeur, ladite antenne présentant sur un substrat un circuit de n spires ayant quatre angles chacune (A, B, C, D) et des portions entre les angles,
**caractérisée en ce qu'**elle comprend:
- un substrat (39, 40) comprenant des fils conducteurs (1-19), lesdits fils conducteurs présentant des portions de spires (1AD-19DC) correspondant à des portions du circuit d'antenne à obtenir, et des croisements de fils au niveau des angles,
- des soudures de fils conducteurs au niveau des croisements (IA-ID) de fils de manière à former le circuit d'antenne.

8. Antenne selon la revendication 7, **caractérisée en ce que** le support est un tissu, les fils conducteurs formant des fils de chaine et de trame.

9. Antenne selon l'une des revendications 7 à 8, **caractérisée en ce que** le circuit comporte au moins un fil conducteur supplémentaire (5, 6) pour former au moins un pont isolant au dessus des spires, ledit pont étant destiné à connecter la spire interne et/ou externe à un composant électronique (33) placé respectivement à l'extérieur ou intérieur de l'antenne.

10. Antenne selon l'une des revendications 7 à 9, **caractérisée en ce que** les fils se présentent sur un substrat sous forme de rubans à faisceau de fils conducteurs (F1, F2, F3).

11. Antenne selon l'une des revendications 7 à 10, **caractérisée en ce que** les fils conducteurs disposés selon une direction du support comportent un gainage isolant alors que ceux disposés dans une direction différente en sont dépourvus.

12. Transpondeur sans-contact comportant une antenne disposée sur un substrat et connectée à un module électronique, **caractérisé en ce que** l'antenne est réalisée selon le procédé et/ou conforme à l'antenne selon l'une des revendications 7 à 11.

13. Produit électronique de communication radiofréquence, tel une carte à puce sans contact, comprenant le transpondeur selon la revendication précédente.
